# FASCICULE DE BREVET EUROPEEN

(11) **EP 3 680 451 B1**
(45) Date de publication et mention de la délivrance du brevet: **28.07.2021**
(21) Numéro de dépôt: 20150422.2
(22) Date de dépôt: 07.01.2020
(51) Int. Cl.: F01D 5/08, F01D 5/30

(54) **ROTOR, TURBINE ÉQUIPÉE D'UN TEL ROTOR ET TURBOMACHINE ÉQUIPÉE D'UNE TELLE TURBINE**
ROTOR, MIT EINEM SOLCHEN ROTOR AUSGERÜSTETE TURBINE UND TURBINENTRIEBWERK, DAS MIT EINER SOLCHEN TURBINE AUSGESTATTET IST
ROTOR, TURBINE PROVIDED WITH SUCH A ROTOR AND TURBINE ENGINE EQUIPPED WITH SUCH A TURBINE

(30) Priorité: 11.01.2019 FR 1900283
(43) Date de publication de la demande: 15.07.2020
(73) Titulaire: SAFRAN AIRCRAFT ENGINES, 75015 Paris (FR)
(72) Inventeur: DOS SANTOS, Antoine Hervé, 77550 MOISSY-CRAMAYEL (FR); DE RICHAUD, Quentin, 77550 MOISSY-CRAMAYEL (FR); TRAPPIER, Nicolas Xavier, 77550 MOISSY-CRAMAYEL (FR)
(74) Mandataire: Regimbeau

(56) Documents cités:
- EP-A1- 2 009 234
- EP-A1- 3 348 790
- EP-A2- 0 043 300
- JP-A- S5 872 604
- US-A- 3 834 831
- US-A1- 2018 112 544
- US-B2- 9 745 852

## Description

### DOMAINE DE L'INVENTION

L'invention se situe dans le domaine général des rotors de turbine d'une turbomachine.

La présente invention concerne plus précisément un rotor comprenant un disque de rotor, muni à sa périphérie d'alvéoles de réception du pied des aubes dudit rotor, ce rotor étant agencé pour refroidir efficacement ces alvéoles.

L'invention concerne également une turbine de turbomachine équipée d'un tel rotor et une turbomachine comprenant une telle turbine.

### ETAT DE LA TECHNIQUE

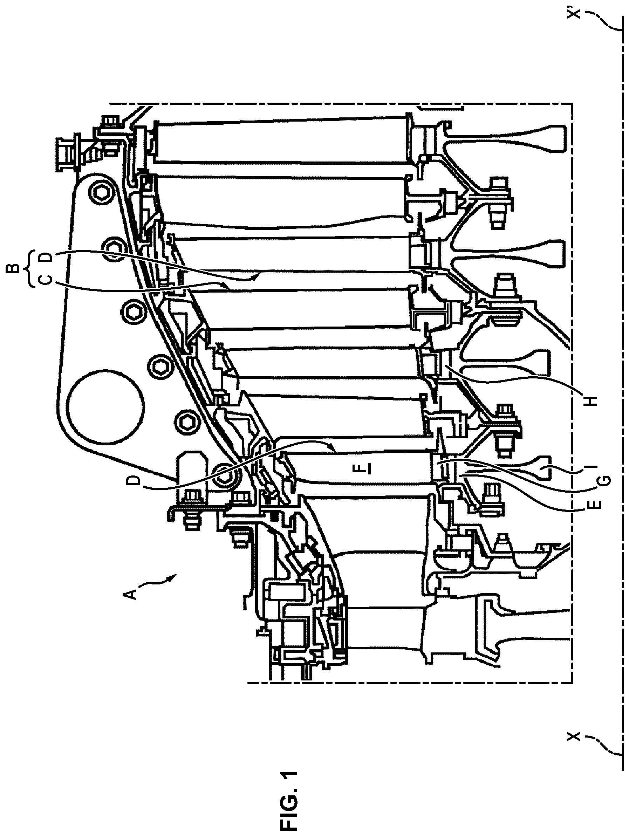

Sur la figure 1 jointe, on peut voir un exemple de turbine A (ici par exemple une turbine basse pression), à plusieurs étages B. Chaque étage B comporte successivement un distributeur C et un rotor (ou roue de rotor) D, de l'amont vers l'aval, par rapport au sens d'écoulement de l'air dans ladite turbine, (c'est-à-dire de la gauche vers la droite sur la figure 1).

La turbine A présente un axe longitudinal X-X'.

Tous les rotors D sont assemblés entre eux, fixés sur un arbre de rotation non représenté sur les figures et entrainés simultanément en rotation.

Chaque rotor D comprend un disque de rotor E, à la périphérie duquel sont fixées des aubes de rotor F. De façon connue en soi, chaque aube F comprend un pied G et le disque de rotor E comporte à sa périphérie une pluralité d'alvéoles axiales H.

Les pieds G des aubes sont montés par emmanchement dans lesdites alvéoles H, (fixation de type tenon-mortaise). Ceci permet la rétention radiale des aubes.

Lorsque le disque de rotor est en place, cet axe de rotation est confondu avec l'axe X-X' de la turbine.

L'une des problématiques principales du dimensionnement de pièces tournant à haute vitesse est la force centrifuge et la contrainte mécanique qu'elle engendre.

Une autre problématique importante réside dans les contraintes mécaniques qui s'exercent dans le fond des alvéoles du disque de rotor. En effet, pendant le fonctionnement de la turbomachine, la veine d'écoulement d'air de la turbine, (dans laquelle sont disposées les aubes), est traversée par des gaz dont la température est très élevée. Les alvéoles des disques qui reçoivent les pieds des aubes étant directement exposées à ces gaz, il est nécessaire de les refroidir pour éviter tout endommagement des disques.

On connaît déjà d'après le document FR 2 918 103 un dispositif de refroidissement des alvéoles d'un disque de rotor de turbomachine. Ce dispositif comprend un flasque annulaire monté en amont et à faible distance d'un disque de rotor, de façon à ménager avec celui-ci un espace annulaire formant une cavité de diffusion d'air de refroidissement. Cette cavité débouche à l'amont, vers plusieurs orifices d'admission d'air, et à l'aval, à l'entrée desdites alvéoles. Il existe toutefois un besoin d'améliorer le refroidissement des alvéoles de ce disque de rotor.

On connaît déjà d'après le document US 9 745 852, un rotor de turbine à gaz comprenant un disque de rotor, muni d'une pluralité de gorges servant à recevoir les pieds des aubes de ce rotor. Le montage est effectué de façon qu'il existe un espace entre le fond de la gorge et la face radialement interne du pied. Le disque de rotor est muni d'un canal permettant d'amener un fluide de refroidissement dans l'espace existant entre le fond de la gorge et la face interne du pied.

En outre, le pied de l'aube est muni d'un conduit radial borgne, disposé à faible distance de l'une des faces d'extrémité du pied de l'aube. Ce conduit radial borgne débouche dans l'espace entre le fond de la gorge et la face interne du pied.

Un élément d'étanchéité est disposé à faible distance devant ladite face d'extrémité du pied et devant l'espace entre le pied d'aube et le fond de la gorge.

Une pluralité d'orifices de sortie axiaux traversants est prévue dans ladite face d'extrémité du pied d'aube. Chacun de ces orifices de sortie débouche à l'une de ses deux extrémités sur ladite face d'extrémité du pied de l'aube et à son autre extrémité dans ledit conduit radial.

Il est ainsi possible d'introduire un fluide de refroidissement dans le canal ménagé dans le disque de rotor. Ce fluide après être sorti du canal, traverse successivement l'espace sous le pied d'aube, le conduit radial, puis les différents orifices de sortie et vient frapper l'élément d'étanchéité pour refroidir ce dernier.

Les orifices de sortie axiaux sont traversants et ne sont donc pas borgnes. En outre, le conduit radial ne débouche pas au travers de la paroi radialement interne de chacun des orifices de sortie.

Enfin, le fonctionnement de ce dispositif est radicalement différent de celui de l'invention, puisqu'il ne permet pas de rediriger de l'air provenant de l'amont du rotor en direction du fond de l'alvéole de réception du pied d'aube.

On connaît également d'après le document EP 3 348 790 un rotor de turbomachine comprenant une pluralité d'aubes reçues chacune dans une alvéole. Le pied de l'aube présente une gorge qui coopère avec un bouclier thermique pour définir un canal axial. Toutefois, les orifices d'éjection d'air relient ce canal axial à la partie supérieure de l'aube et non à la face radialement interne du pied de l'aube. Ils ne permettent donc pas le refroidissement de l'alvéole.

### EXPOSE DE L'INVENTION

Un but de l'invention est donc de résoudre les problématiques évoquées ci-dessus.

A cet effet, l'invention concerne un rotor d'une turbine de turbomachine, comprenant un disque de rotor et une pluralité d'aubes réparties à sa périphérie, ledit disque de rotor comprenant une pluralité d'alvéoles, qui s'étendent principalement axialement et qui sont régulièrement réparties à sa périphérie autour de l'axe du rotor, chaque aube comprenant un pied monté et retenu dans une des alvéoles dudit disque de rotor, chaque pied étant dimensionné de façon à ménager un espace entre le fond de l'alvéole et la face radialement interne du pied.

Conformément à l'invention, ce pied comprend un trou borgne qui s'étend principalement axialement et qui débouche sur la face amont du pied et une pluralité d'orifices d'éjection d'air, ledit trou borgne s'étend sur la majeure partie de la longueur axiale du pied d'aube, et chaque orifice d'éjection d'air s'étend principalement radialement et débouche à l'une de ses extrémités dans ledit trou borgne et à son autre extrémité sur la face radialement interne du pied située en regard du fond de l'alvéole.

Grâce à ces caractéristiques de l'invention, l'air arrivant sur la face amont du disque de rotor est accéléré et dirigé vers le fond des alvéoles où il réalise un refroidissement par impact de jets d'air. En outre, la présence du trou borgne permet de diminuer le poids de l'aube.

Selon d'autres caractéristiques avantageuses et non limitatives de l'invention, prises seules ou en combinaison :
- ledit trou borgne présente une paroi radialement interne, de préférence plane, et chaque orifice d'éjection d'air débouche à l'une de ses extrémités sur ladite paroi radialement interne du trou borgne et à son autre extrémité sur la face radialement interne du pied, située en regard du fond de l'alvéole.
- le pied présente une forme en pied de sapin comprenant un lobe radialement interne et un lobe radialement externe, ledit trou borgne étant ménagé dans le lobe radialement interne et lesdits orifices d'éjection d'air étant ménagés dans l'extrémité radialement interne dudit lobe radialement interne ;
- ledit trou borgne présente une section transversale en forme de dôme dont le côté radialement externe est incurvé et le côté radialement interne est rectiligne ;
- la hauteur du trou borgne se réduit sur au moins une partie de la longueur dudit trou borgne en direction du fond du trou borgne ;
- l'extrémité aval du trou borgne est incurvée et se termine en pointe et au moins un orifice d'éjection d'air débouche au niveau de cette pointe ;
- les orifices d'éjection d'air sont tous alignés;
- les orifices d'éjection d'air s'étendent selon au moins deux lignes parallèles ;
- lesdits orifices d'éjection d'air d'une ligne sont décalés axialement et circonférentiellement par rapport aux orifices d'éjection d'air d'une autre ligne ;
- le pied de l'aube est muni d'un cache conformé pour empêcher l'air de déboucher axialement dans l'espace ménagé entre le fond de l'alvéole et la face radialement interne du pied ;
- le rotor comprend un circuit d'amenée d'air ménagé entre une bride annulaire amont du disque rotor, et un flasque annulaire monté en regard et à distance de la bride annulaire amont, le circuit d'amenée d'air débouchant dans les trous borgnes et/ou dans les alvéoles.

L'invention concerne également une turbine de turbomachine comprenant au moins un rotor tel que précité.

L'invention concerne enfin une turbomachine, telle qu'un turboréacteur ou un turbopropulseur d'avion, qui comprend au moins une turbine telle que précitée.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
[Fig. 1] est une vue en coupe longitudinale (c'est-à-dire axiale) d'une turbine de turbomachine selon l'état de la technique.
[Fig. 2] est une vue en perspective d'une partie d'un disque de rotor et d'une partie d'une aube conforme à un premier mode de réalisation de l'invention.
[Fig. 3] est une vue en perspective du pied de l'aube de la figure 2.
[Fig. 4] est une vue en perspective et de dessous d'une variante de réalisation d'un pied d'une aube.
[Fig. 5] est une vue en perspective et de détail de la partie radialement interne du pied d'aube de la figure 3.
[Fig. 6] est une vue en coupe longitudinale (axiale) de la partie radialement interne d'un pied d'aube conforme à une autre variante de réalisation de l'invention.
[Fig. 7] est une vue en coupe axiale de la partie radialement interne d'un pied d'aube, du disque de rotor et d'un exemple de réalisation d'un dispositif d'amenée d'air.
[Fig. 8] est une vue en perspective d'une partie d'un disque de rotor et d'une partie d'une aube conforme à un second mode de réalisation de l'invention.
[Fig. 9] est une vue en perspective d'une partie du pied d'aube représenté sur la figure 8.

### DESCRIPTION DETAILLEE DE L'INVENTION

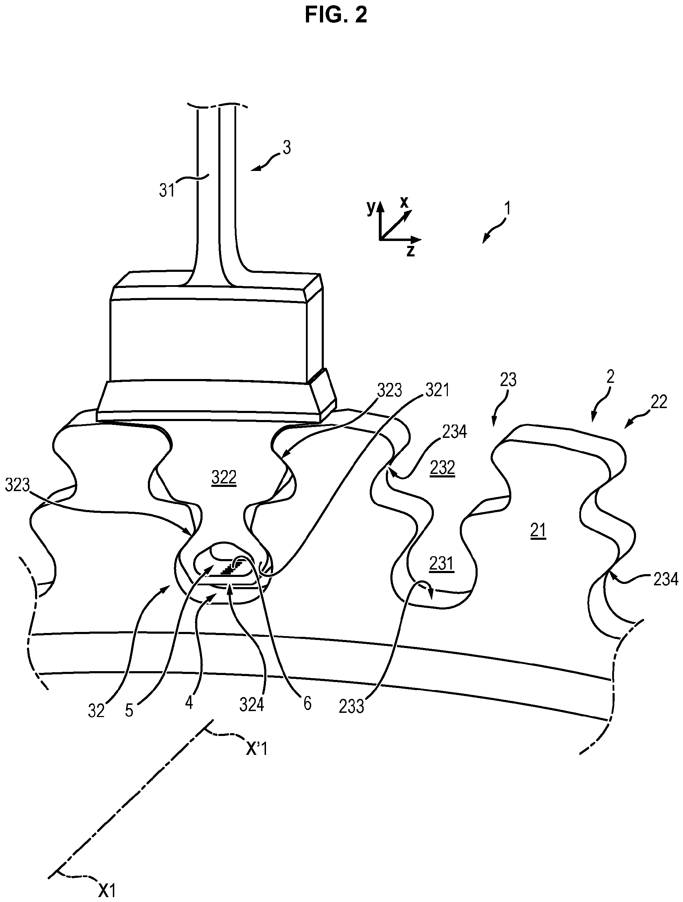

Comme on peut le voir sur la figure 2, le rotor 1 de turbine conforme à l'invention comprend un disque de rotor 2 et une pluralité d'aubes 3 réparties à sa périphérie, (une seule aube étant visible sur la figure 2). La turbine peut être haute ou basse pression.

Le disque 2 est destiné à être entraîné en rotation autour d'un axe de rotation X1-X'1, qui se confond avec son axe longitudinal.

On définit en chaque point du rotor 1 :
- une direction axiale x, parallèle à l'axe de rotation X1-X'1,
- une direction radiale y, qui s'étend selon un rayon du rotor perpendiculairement à la direction axiale x, et
- une direction circonférentielle z, perpendiculaire à la direction axiale x et à la direction radiale y.

Le disque 2 présente une face amont 21 et une face aval 22 opposées, les termes « amont » et « aval » étant à prendre en considération par rapport au sens d'écoulement des gaz dans la turbine.

Le disque 2 comporte en outre à sa périphérie une pluralité d'alvéoles 23 ouvertes radialement vers l'extérieur du disque 2 et réparties régulièrement autour de son axe de rotation X1-X'1. Ces alvéoles s'étendent principalement axialement, c'est-à-dire qu'elles sont soit axiales, soit légèrement inclinées par rapport à la direction axiale x.

Chaque aube 3 comprend une pale aérodynamique 31 qui se prolonge radialement vers l'intérieur par un pied 32.

Sur l'exemple de réalisation représenté sur les figures, le pied 32 présente une forme connue de l'homme du métier sous l'appellation « pied de sapin ».

Le pied 32 présente ainsi un lobe radialement interne 321 et un lobe radialement externe 322, le lobe radialement interne 321 étant moins large en direction circonférentielle z que le lobe 322.

L'alvéole 23 présente une forme analogue à celle du pied 32. Elle comprend donc une partie radialement interne 231 et une partie radialement externe 232 plus large.

L'alvéole 23 présente un fond 233.

Chaque lobe 321, 322 du pied 32 présente en section transversale une forme en queue d'aronde. Chaque lobe 321, 322 comprend des portées 323 qui viennent en appui contre les faces de rétention 234 des alvéoles 23. Chaque pied est ainsi monté et retenu dans une alvéole.

Le pied 32 de l'aube est configuré et dimensionné de façon à ce qu'il existe un espace 4 entre sa face radialement interne 324, (ici la face radialement interne 324 du lobe radialement interne 321) et le fond 233 de l'alvéole 23, lorsque le pied d'aube est monté dans l'alvéole 23. De préférence, la face radialement interne 324 est plane.

Conformément à l'invention, un trou borgne 5 est ménagé dans le pied 32 de l'aube. Dans le mode de réalisation du pied représenté sur les figures, le trou borgne 5 est ménagé dans le lobe radialement interne 321. Ce trou borgne s'étend principalement axialement. De préférence, ce trou borgne 5 s'étend selon une direction parallèle à celle du fond de l'alvéole 23.

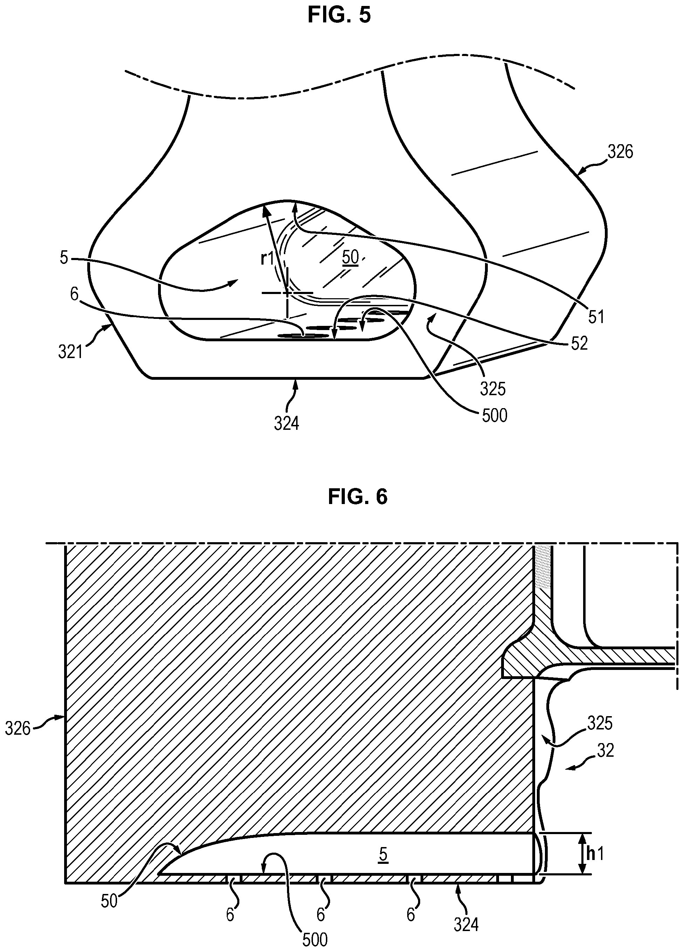

Ce trou borgne 5 s'étend sur la majeure partie de la longueur axiale du pied d'aube 32, comme cela apparaît mieux sur la vue en coupe de la figure 6.

Ce trou 5 est borgne, de sorte qu'il débouche sur la face amont 325 du pied 32 (voir figure 5) mais qu'il ne débouche pas sur la face aval 326 opposée de ce pied.

De préférence, ce trou 5 est situé au centre du pied et donc du lobe radialement interne 321, de façon à diminuer son impact mécanique et à diminuer la concentration des contraintes qui s'appliquent au niveau du pied.

La paroi radialement interne du trou borgne 5 porte la référence 500.

De préférence, et comme cela apparait mieux sur la figure 5, ce trou borgne 5 présente en section transversale une forme de dôme, c'est-à-dire une section dont le côté radialement externe 51 est incurvé de préférence avec un grand rayon de courbure r1 et dont le côté radialement interne 52 est de préférence rectiligne. Ceci permet de limiter les contraintes mécaniques au niveau du côté 51 soumis à de fortes tractions.

Lorsque le trou borgne 5 présente une section transversale en forme de dôme, sa paroi radialement interne 500 est donc plane.

Conformément à l'invention, ce pied 32 est également muni d'une pluralité d'orifices d'éjection d'air 6, qui s'étendent principalement radialement au travers de l'extrémité radialement interne du pied, (ici au travers de celle du lobe radialement interne 321). Chaque orifice d'éjection d'air 6 débouche à l'une de ses extrémités dans ledit trou borgne 5, plus précisément sur sa paroi radialement interne 500, et débouche à son extrémité opposée sur la face radialement interne 324 du pied, en mettant ainsi en communication de fluide (air) le trou borgne 5 et le fond 232 de l'alvéole 23, lorsque l'aube 3 est insérée dans le disque de rotor 2.

Ces orifices d'éjection d'air 6 présentent un petit diamètre proportionnellement aux dimensions du trou borgne 5, ce qui permet de réaliser un refroidissement du fond 233 de l'alvéole par impact de jets d'air. A titre purement illustratif, ces orifices peuvent être d'un diamètre de l'ordre de 1 mm à 5 mm alors que le trou borgne 5 présente une largeur comprise entre environ 5 mm et 20 mm.

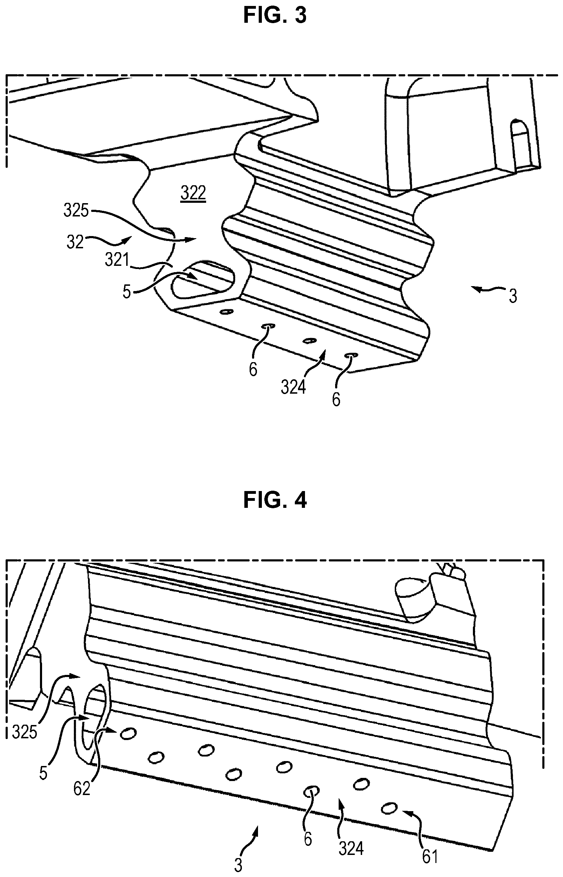

Selon un premier mode de réalisation représenté sur la figure 3, les différents orifices d'éjection d'air 6 sont alignés selon une seule ligne, de préférence axiale (direction x).

Selon une variante de réalisation représentée sur la figure 4, les orifices d'éjection d'air 6 sont disposés selon deux lignes 61, 62 parallèles entre-elles, de préférence axiales. De préférence, les orifices 6 d'une ligne sont décalés, par exemple d'un demi pas, par rapport aux orifices 6 de l'autre ligne.

L'air provenant de l'amont du rotor et qui pénètre axialement dans le trou borgne 5 est redirigé radialement en direction du fond 233 de l'alvéole 23, via les orifices d'éjection d'air 6. L'alvéole 23 reçoit également de l'air axialement depuis l'amont du rotor. Ceci créé au niveau de l'alvéole, un phénomène de turbulences (dû au croisement des flux), qui permet un refroidissement plus efficace du fond 233 de l'alvéole 23.

Le nombre d'orifices 6 est à adapter en fonction du refroidissement souhaité tout en tenant compte des sollicitations mécaniques du pied d'aube et en évitant de fragiliser ce pied.

La résistance mécanique du disque de rotor 2 s'en trouve améliorée.

En outre, le gain de masse réalisé par la formation du trou borgne 5 dans chaque aube est de l'ordre d'un gramme par aube environ. De plus, le fond 233 de l'alvéole 23 étant mieux refroidi, le disque de rotor 2 peut être réalisé avec un poireau de disque moins massif. Un exemple d'un tel poireau I est visible sur la figure 1. A titre d'exemple purement illustratif, le gain de masse sur le poireau, combiné au gain de masse sur le pied d'aube, permet de gagner environ 1kg par disque de rotor 2 pour une turbine.

Une variante de réalisation du pied est représentée sur la figure 6.

Dans ce cas, le trou borgne 5 présente une hauteur h1 dégressive en direction de son fond 50, et ce, soit depuis l'entrée du trou 5, soit depuis un point quelconque de sa longueur (sur l'exemple de la figure 6, on peut voir que la hauteur h1 est dégressive depuis sensiblement la moitié du trou). Cette forme a pour effet d'éviter les pertes de charge et de conserver un débit d'air suffisant y compris dans les orifices 6 situés à proximité du fond 50 du trou borgne 5.

De préférence, la paroi supérieure de l'extrémité aval du trou borgne 5 est incurvée vers le fond de sorte que le trou se termine en pointe et au moins un orifice d'éjection d'air 6 débouche au niveau de cette pointe (voir figure 6). Cette forme permet de canaliser l'air jusqu'au fond et jusqu'au(x) dernier(s) orifice(s) 6, sans pertes de charge.

Selon une variante de réalisation, non représentée sur les figures, le pied d'aube 32 peut comprendre un seul lobe radialement interne, percé du trou borgne 5 et des orifices 6. En d'autres termes, il ne présente pas de lobe 322.

Selon une autre variante de réalisation non représentée sur les figures, il serait également possible de prévoir un trou borgne 5 dans le lobe radialement externe 322 et des orifices d'éjection d'air reliant le trou borgne ménagé dans le lobe 322 au trou borgne 5 ménagé dans le lobe radialement interne 321.

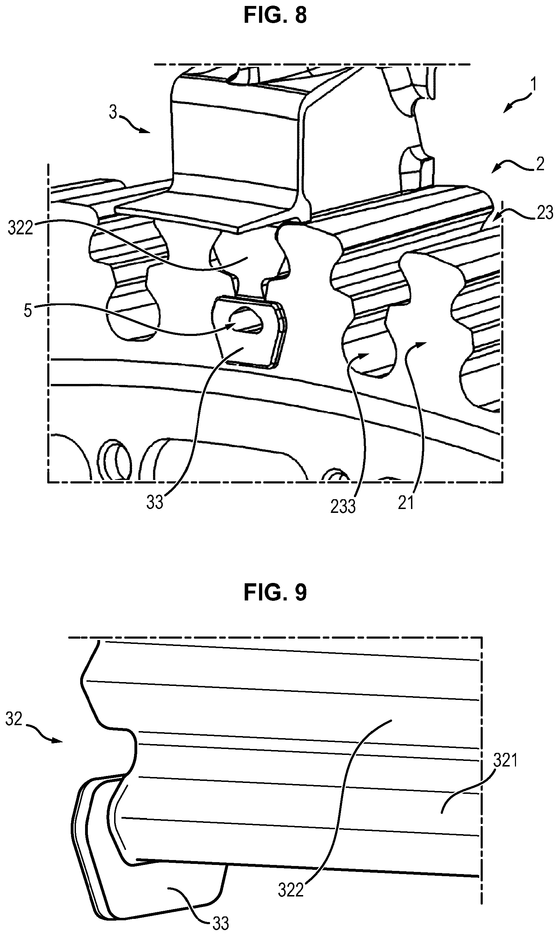

Selon une autre variante de réalisation représentée sur les figures 8 et 9, le lobe radialement interne 321 du pied 32 est muni d'un cache 33, conformé pour obturer l'espace résiduel entre ledit lobe radialement interne 321 et les parois de l'alvéole 23 dans laquelle ce lobe se trouve. Ce cache 33 est avantageusement constitué d'une plaque disposée du côté amont du pied 32. Ainsi, l'air ne peut plus pénétrer directement dans l'alvéole 23 et tout le flux d'air est obligé de traverser le trou borgne 5 puis les orifices d'éjection d'air 6. Le refroidissement du fond de l'alvéole s'en trouve accentué.

De façon avantageuse et comme cela apparaît mieux sur la figure 9, le cache 33 peut même être plus grand que la partie interne 231 de l'alvéole 23 et permettre l'arrêt axial de l'aube 3. Le cache 33 vient alors en butée contre la face amont 21 du disque.

En fonction de la forme de pied 32 (par exemple s'il n'est pas en pied de sapin), le cache 33 peut être solidaire de l'unique lobe du pied.

Par ailleurs, le rotor 1 conforme à l'invention comprend également un circuit d'amenée d'air 7, qui guide une partie de l'air entrant dans le rotor jusqu'à l'entrée du trou borgne 5 et éventuellement jusqu'à l'entrée des alvéoles 23 si le pied 32 n'est pas équipé du cache 33.

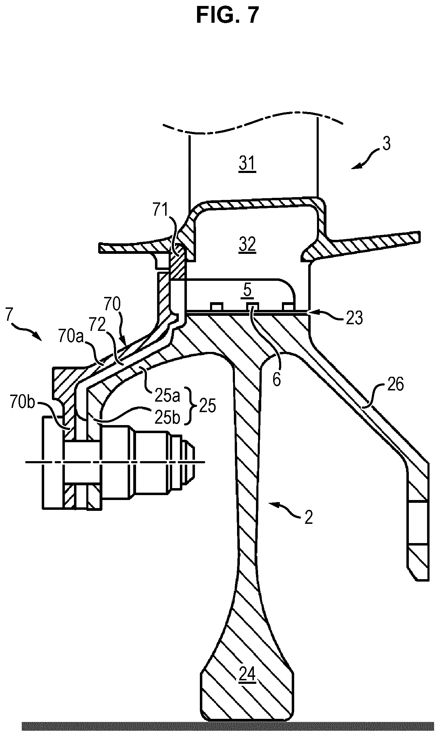

Un exemple de réalisation d'un tel circuit d'air 7 est représenté sur la figure 7. Sur cette figure, on peut voir que le disque de rotor 2 comprend de part et d'autre du poireau central 24, une bride annulaire amont 25 et une bride annulaire aval 26.

La bride annulaire amont 25 comprend une partie annulaire 25a sensiblement axiale qui se prolonge par une partie annulaire 25b sensiblement radiale.

Le circuit 7 comprend un flasque annulaire 70 monté en regard de la face amont de la bride annulaire amont 25 du disque 2 avec interposition d'un jonc annulaire d'arrêt 71.

Le flasque 70 comprend une partie annulaire sensiblement axiale 70a et une partie annulaire sensiblement radiale 70b.

Le flasque 70 épouse sensiblement la forme de la bride amont 25. Il est disposé à faible distance de celle-ci, de façon à ménager avec cette dernière, un espace annulaire 72 formant une cavité de diffusion de l'air de refroidissement. Cette cavité 72 débouche en amont sur une ou plusieurs ouvertures d'admission de l'air pénétrant dans le rotor et en aval en regard des trous borgnes 5 et éventuellement en regard de l'entrée de l'alvéole 23. L'air y est ainsi guidé de sorte à refroidir les alvéoles 23 et les pieds 32 d'aube.

## Revendications

1. Rotor (1) d'une turbine de turbomachine, comprenant un disque de rotor (2) et une pluralité d'aubes (3) réparties à sa périphérie, ledit disque de rotor (2) comprenant une pluralité d'alvéoles (23) qui s'étendent principalement axialement et qui sont régulièrement réparties à sa périphérie, autour de l'axe du rotor (X1-X'1), chaque aube (3) comprenant un pied (32) monté et retenu dans une des alvéoles (23) dudit disque de rotor, chaque pied (32) étant dimensionné de façon à ménager un espace (4) entre le fond (233) de l'alvéole (23) et la face radialement interne (324) du pied (32), **caractérisé en ce que** ledit pied (32) comprend un trou borgne (5) qui s'étend principalement axialement et qui débouche sur la face amont (325) du pied (32) et une pluralité d'orifices (6) d'éjection d'air, **en ce que** ledit trou borgne (5) s'étend sur la majeure partie de la longueur axiale du pied d'aube (32) et **en ce que** chaque orifice d'éjection d'air (6) s'étend principalement radialement et débouche à l'une de ses extrémités dans ledit trou borgne (5) et à son autre extrémité sur la face radialement interne (324) du pied située en regard du fond de l'alvéole (23).

2. Rotor (1) selon la revendication 1, **caractérisé en ce que** ledit trou borgne (5) présente une paroi radialement interne (500), de préférence plane, et **en ce que** chaque orifice d'éjection d'air (6) débouche à l'une de ses extrémités sur ladite paroi radialement interne (500) du trou borgne (5) et à son autre extrémité sur la face radialement interne (324) du pied, située en regard du fond de l'alvéole (23).

3. Rotor (1) selon la revendication 1 ou 2, **caractérisé en ce que** le pied (32) présente une forme en pied de sapin comprenant un lobe radialement interne (321) et un lobe radialement externe (322), ledit trou borgne (5) étant ménagé dans le lobe radialement interne (321) et lesdits orifices d'éjection d'air (6) étant ménagés dans l'extrémité radialement interne dudit lobe radialement interne (321).

4. Rotor (1) selon l'une des revendications précédentes, **caractérisé en ce que** ledit trou borgne (5) présente une section transversale en forme de dôme dont le côté radialement externe (51) est incurvé et le côté radialement interne (52) est rectiligne.

5. Rotor (1) selon l'une quelconque des revendications précédentes, **caractérisé en ce que** la hauteur (h1) du trou borgne (5) se réduit sur au moins une partie de la longueur dudit trou borgne (5), en direction du fond (50) du trou borgne (5).

6. Rotor (1) selon la revendication 5, **caractérisé en ce que** l'extrémité aval du trou borgne (5) est incurvée et se termine en pointe et **en ce qu'**au moins un orifice d'éjection d'air (6) débouche au niveau de cette pointe.

7. Rotor (1) selon l'une quelconque des revendications précédentes, **caractérisé en ce que** les orifices d'éjection d'air (6) sont tous alignés.

8. Rotor (1) selon l'une quelconque des revendications 1 à 6, **caractérisé en ce que** les orifices d'éjection d'air (6) s'étendent selon au moins deux lignes parallèles (61, 62).

9. Rotor (1) selon la revendication 8, **caractérisé en ce que** lesdits orifices d'éjection d'air (6) d'une ligne (61) sont décalés axialement et circonférentiellement par rapport aux orifices d'éjection d'air (6) d'une autre ligne (62).

10. Rotor (1) selon l'une quelconque des revendications précédentes, **caractérisé en ce que** le pied (32) de l'aube (3) est muni d'un cache (33) conformé pour empêcher l'air de déboucher axialement dans l'espace ménagé entre le fond de l'alvéole (23) et la face radialement interne du pied (32).

11. Rotor (1) selon l'une quelconque des revendications précédentes, **caractérisé en ce qu'**il comprend un circuit d'amenée d'air (7) ménagé entre une bride annulaire amont (25) du disque de rotor (2) et un flasque annulaire (70) monté en regard et à distance de la bride annulaire amont (25), le circuit d'amenée d'air (7) débouchant dans les trous borgnes (5) et/ou dans les alvéoles (23).

12. Turbine de turbomachine, **caractérisée en ce qu'**elle comprend au moins un rotor (1) selon l'une quelconque des revendications 1 à 11.

13. Turbomachine, telle qu'un turboréacteur ou un turbopropulseur d'avion, **caractérisé en ce qu'**elle comprend au moins une turbine selon la revendication 12.

## Patentansprüche

1. Rotor (1) einer Turbinentriebwerksturbine, der eine Rotorscheibe (2) und eine Vielzahl von Schaufeln (3) umfasst, die an seinem Umfang verteilt sind, wobei die Rotorscheibe (2) eine Vielzahl von Waben (23) umfasst, die sich hauptsächlich axial erstrecken und die regelmäßig an ihrem Umfang um die Achse des Rotors (X1-X'1) verteilt sind, wobei jede Schaufel (3) einen Fuß (32) umfasst, der in einer der Waben (23) der Rotorscheibe montiert ist und gehalten wird, wobei jeder Fuß (32) derart bemessen ist, dass ein Raum (4) zwischen dem Boden (233) der Wabe (23) und der radial inneren Fläche (324) des Fußes (32) vorgesehen ist, **dadurch gekennzeichnet, dass** der Fuß (32) ein Sackloch (5), das sich hauptsächlich axial erstreckt und das in die stromaufwärtige Fläche (325) des Fußes (32) mündet, und eine Vielzahl von Luftausstoßöffnungen (6) umfasst, dadurch, dass das Sackloch (5) sich über den Großteil der axialen Länge des Schaufelfußes (32) erstreckt, und dadurch, dass jede Luftausstoßöffnung (6) sich hauptsächlich radial erstreckt und an einem ihrer Enden in das Sackloch (5) und an ihrem anderen Ende auf der radial inneren Fläche (324) des Fußes mündet, die sich dem Boden der Wabe (23) gegenüberliegend befindet.

2. Rotor (1) nach Anspruch 1, **dadurch gekennzeichnet, dass** das Sackloch (5) eine radial innere Wand (500) aufweist, die vorzugsweise eben ist, und dadurch, dass jede Luftausstoßöffnung (6) an einem ihrer Enden auf der radial inneren Wand (500) des Sacklochs (5) und an ihrem anderen Ende auf der radial inneren Fläche (324) des Fußes mündet, die sich dem Boden der Wabe (23) gegenüberliegend befindet.

3. Rotor (1) nach Anspruch 1 oder 2, **dadurch gekennzeichnet, dass** der Fuß (32) eine Form eines Tannenfußes aufweist, die eine radial innere Keule (321) und eine radial äußere Keule (322) umfasst, wobei das Sackloch (5) in der radial inneren Keule (321) vorgesehen ist und die Luftausstoßöffnungen (6) in dem radial inneren Ende der radial inneren Keule (321) vorgesehen sind.

4. Rotor (1) nach einem der vorhergehenden Ansprüche, **dadurch gekennzeichnet, dass** das Sackloch (5) einen Querschnitt mit der Form einer Kuppel aufweist, deren radial äußere Seite (51) gebogen ist und deren radial innere Seite (52) gerade ist.

5. Rotor (1) nach einem der vorhergehenden Ansprüche, **dadurch gekennzeichnet, dass** die Höhe (h1) des Sacklochs (5) sich über mindestens einen Teil der Länge des Sacklochs (5) in Richtung des Bodens (50) des Sacklochs (5) vermindert.

6. Rotor (1) nach Anspruch 5, **dadurch gekennzeichnet, dass** das stromabwärtige Ende des Sacklochs (5) gebogen ist und mit einer Spitze endet, und dadurch, dass mindestens eine Luftausstoßöffnung (6) im Bereich dieser Spitze mündet.

7. Rotor (1) nach einem der vorhergehenden Ansprüche, **dadurch gekennzeichnet, dass** die Luftausstoßöffnungen (6) alle ausgerichtet sind.

8. Rotor (1) nach einem der Ansprüche 1 bis 6, **dadurch gekennzeichnet, dass** die Luftausstoßöffnungen (6) sich entlang mindestens zweier paralleler Linien (61, 62) erstrecken.

9. Rotor (1) nach Anspruch 8, **dadurch gekennzeichnet, dass** die Luftausstoßöffnungen (6) einer Linie (61) in Bezug auf die Luftausstoßöffnungen (6) einer anderen Linie (62) axial und in Umfangsrichtung versetzt sind.

10. Rotor (1) nach einem der vorhergehenden Ansprüche, **dadurch gekennzeichnet, dass** der Fuß (32) der Schaufel (3) mit einer Abdeckung (33) versehen ist, die angepasst ist, um zu verhindern, dass die Luft axial in den Raum mündet, der zwischen dem Boden der Wabe (23) und der radial inneren Fläche des Fußes (32) vorgesehen ist.

11. Rotor (1) nach einem der vorhergehenden Ansprüche, **dadurch gekennzeichnet, dass** er einen Luftzuleitungskreislauf (7) umfasst, der zwischen einem stromaufwärtigen ringförmigen Bund (25) der Rotorscheibe (2) und einem ringförmigen Flansch (70) vorgesehen ist, der dem stromaufwärtigen ringförmigen Bund (25) gegenüberliegend und im Abstand davon montiert ist, wobei der Luftzuleitungskreislauf (7) in die Sacklöcher (5) und/oder in die Waben (23) mündet.

12. Turbinentriebwerksturbine, **dadurch gekennzeichnet, dass** sie mindestens einen Rotor (1) nach einem der Ansprüche 1 bis 11 umfasst.

13. Turbinentriebwerk, wie beispielsweise ein Turbinenluftstrahltriebwerk oder ein Flugzeug-Propellerturbinentriebwerk, **dadurch gekennzeichnet, dass** es mindestens eine Turbine nach Anspruch 12 umfasst.

## Claims

1. A rotor (1) of a turbomachine turbine, comprising a rotor disc (2) and a plurality of blades (3) distributed at its periphery, said rotor disc (2) comprising a plurality of cells (23) which extend mainly axially and which are regularly distributed at its periphery, around the axis of the rotor (X1-X'1), each blade (3) comprising a root (32) mounted and retained in one of the cells (23) of said rotor disc, each root (32) being dimensioned so as to form a space (4) between the bottom (233) of the cell (23) and the radially inner face (324) of the root (32), **characterized in that** said root (32) comprises a blind hole (5) which extends mainly axially and which opens onto the upstream face (325) of the root (32) and a plurality of air ejection orifices (6), **in that** said blind hole (5) extends over the major portion of the axial length of the blade root (32) and **in that** each air ejection orifice (6) extends mainly radially and opens at one of its ends into said blind hole (5) and at its other end onto the radially inner face (324) of the root located facing the bottom of the cell (23).

2. The rotor (1) according to claim 1, **characterized in that** said blind hole (5) has a radially inner wall (500), preferably planar, and **in that** each air ejection orifice (6) opens at one of its ends onto said radially inner wall (500) of the blind hole (5) and at its other end onto the radially inner face (324) of the root, located facing the bottom of the cell (23).

3. The rotor (1) according to claim 1 or 2, **characterized in that** the root (32) has a fir tree shape comprising a radially inner lobe (321) and a radially outer lobe (322), said blind hole (5) being formed in the radially inner lobe (321) and said air ejection orifices (6) being formed in the radially inner end of said radially inner lobe (321).

4. The rotor (1) according to one of the preceding claims, **characterized in that** said blind hole (5) has a dome-shaped cross section whose radially outer side (51) is curved and radially inner side (52) is straight.

5. The rotor (1) according to any one of the preceding claims, **characterized in that** the height (h1) of the blind hole (5) is reduced over at least part of the length of said blind hole (5), in the direction of the bottom (50) of the blind hole (5).

6. The rotor (1) according to claim 5, **characterized in that** the downstream end of the blind hole (5) is curved and ends in a point and **in that** at least one air ejection orifice (6) opens at this point.

7. The rotor (1) according to any one of the preceding claims, **characterized in that** the air ejection orifices (6) are all aligned.

8. The rotor (1) according to any one of claims 1 to 6, **characterized in that** the air ejection orifices (6) extend along at least two parallel lines (61, 62).

9. The rotor (1) according to claim 8, **characterized in that** said air ejection orifices (6) of one line (61) are axially and circumferentially offset relative to the air ejection orifices (6) of another line (62).

10. The rotor (1) according to any one of the preceding claims, **characterized in that** the blade (3) root (32) is provided with a cover (33) shaped to prevent the air from axially emerging into the space provided between the bottom of the cell (23) and the radially inner face of the root (32).

11. The rotor (1) according to any one of the preceding claims, **characterized in that** it comprises an air supply circuit (7) formed between an upstream annular flange (25) of the rotor disc (2) and an annular end plate (70) mounted facing and at a distance from the upstream annular flange (25), the air supply circuit (7) opening into the blind holes (5) and/or into the cells (23).

12. A turbomachine turbine, **characterized in that** it comprises at least one rotor (1) according to any one of claims 1 to 11.

13. A turbomachine, such as an aircraft turbojet engine or a turbo-prop, **characterized in that** it comprises at least one turbine according to claim 12.
